# EUROPEAN PATENT SPECIFICATION

(11) **EP 0 506 395 B1**
(45) Date of publication and mention of the grant of the patent: **27.05.1998**
(21) Application number: 92302618.1
(22) Date of filing: 26.03.1992
(51) Int. Cl.: C09D 11/00

(54) **Solid ink jet composition**
Zusammensetzung für feste Druckstrahltinte
Composition d'encre solide pour imprimantes à jet d'encre

(30) Priority: 29.03.1991 US 677552
(43) Date of publication of application: 30.09.1992
(73) Proprietor: LEXMARK INTERNATIONAL, INC., Greenwich, Connecticut 06836 (US)
(72) Inventor: Gendler, Paul Lewis, San Jose, California 95123 (US); Pence, Steven B., San Jose, California 95124 (US); Sporer, Alfred H., San Jose, California 95124 (US)
(74) Representative: Skailes, Humphrey John

(56) References cited:
- EP-A- 0 404 493
- US-A- 4 878 946
- PATENT ABSTRACTS OF JAPAN, vol. 11, no. 232 (C-437)[2679], 29th July 1987; & JP-A-62 43 471

## Description

### Field of the Invention

The present invention relates to a solid hot-melt ink composition comprising a colorant, water, emulsifier, coemulsifier and a wax. This ink composition is stable to freeze-thaw cycles and is suitable for jetting as a hot melt ink in continuous or drop-on-demand ink jet printers.

### Background of the Invention

Ink jet printers commonly use inks which are a liquid at ambient temperature. Water is used as a fluid vehicle for inks including thermal jet inks. In thermal ink jet printers, water also functions as the bubble-forming component to expel the ink droplets from the chamber upon heating above its boiling point. For all ink jet printers, water-based inks must generally balance the tradeoff between a slower evaporation rate in the printhead for low nozzle maintenance, versus a faster evaporation rate for a short drying time on the paper. Other fluids have been added to the water to either prevent the water from drying in the nozzle or to enhance the drying time on the paper; the latter by accelerating evaporation of the water. However, volatile additives, such as alcohols, also reduce surface tension which results in poorer print quality because of drop feathering (radial streaking) on the paper.

In color printing, water-based inks must contend with an additional complication, namely, color bleeding. If one color is printed adjacent to a second color "bleeding" can occur along their contiguous boundary. That is, the drop of the first color has wetted the underlying paper allowing the drop of the second color to spread on the previously wetted surface into the first color. The problem is exacerbated if a fluid has been added to the water to slow its evaporation.

Solid hot-melt inks do not have the problems associated with liquid inks e.g. bleeding. Solid inks are melted in the printhead and jetted onto the paper. The ejected hot ink drop instantly freezes on contact with the cooler paper. Thus, the printed spot quality, i.e., its roundness, is generally high even on unsized highly absorbent paper.

Merrit et al., U.S. Patent 4,390,369 issued November 27, 1984, discloses a hot-melt ink composition containing "at least one natural wax which may be the basic fluid vehicle or may be used as an additive to other fluidic vehicles such as fatty acids and, more particularly, oleic acid and oleic acid with benzyl ether". Merritt teaches that his composition is useful for impulse ink jet printers which do not require a bubble former component in the ink to eject ink bubbles from the compression chamber. Tabayashi et al. U.S. Patent 4,878,946, issued November 7, 1989, discloses a solid hot-melt melt ink comprising wax, dye, and a phosphoric acid ester. This ink is not suitable for thermal ink jet printers. Frihart et al., U.S. Patent 4,830,671, issued May 16, 1989, disclose a solid hot melt ink composition comprising a colorant and resin binder. Frihart teaches that water should be avoided. This ink is not suitable for thermal ink jet printers. Vaught, U.S. Patent 4,490,731, issued December 25, 1984, teaches a solid ink comprising wax, colorant, alkyd resin, and isopropyl alcohol. However, at an elevated temperature such as that achieved in heated printheads of a thermal ink jet printer, the isopropyl alcohol component would evaporate. Therefore this ink is not suitable for thermal ink jet printers.

Therefore, there still is a need in the art for a solid ink jet composition which is useful in thermal ink jet printers.

It is therefore an object of this invention to provide an improved solid ink composition useful in thermal ink jet printers.

Other objects and advantages will become apparent from the following disclosure.

### Summary of the Invention

The present invention relates to a solid ink composition comprising wax, colorant, water, emulsifier and coemulsifier. The composition preferably has a melting point greater than about 40°C and forms a liquid microemulsion with a low viscosity of preferably less than about 25mN-sec/M².

The composition is preferably a water-in-oil microemulsion which is stable to repeated freeze-thaw cycles. The solid ink composition of the present invention is suitable for use in ink jet printers, particularly in thermal, drop-on-demand, bubble ink jet printers.

A more thorough disclosure of the present invention is presented in the detailed description which follows.

### Detailed Description of the Invention

The present invention relates to a solid ink composition comprising wax, colorant, water, an emulsifier and a coemulsifier. The composition preferably has a melting point greater than about 40°C and forms a liquid microemulsion with a low viscosity. The melting point of the composition is suitably about 40°C to about 90°C and preferably about 40°c to about 60°C. The viscosity of the liquid is preferably less than about 25mN-sec/M² in the temperature range of about 60°C to about 90°C and more preferably less than about 10mN-sec/m².

The composition of the present invention is preferably a stable, water-in-oil microemulsion. As used herein, "microemulsion" means a stable, mixture of two or more immiscible liquids held in colloidal solution by an emulsifier. Prior to the addition of the colorant, the microemulsion is clear or translucent. The microemulsion is prepared by mixing liquid components together with ordinary mixing equipment without the use of high-speed stirrers or other shearing equipment commonly used to form conventional emulsions and dispersions. The microemulsion is also stable through freeze-melt cycles, that is, a liquid microemulsion is reformed after repeated solidification and remelting.

Waxes for use in the composition of the present invention include natural and synthetic waxes and waxy materials. Suitable natural waxes are of vegetable, animal or mineral origin or chemically modified derivatives thereof and include paraffin, ceresin, beeswax, montan, oxidized montan and carnuba waxes. Suitable synthetic waxes include polyolefin waxes such a polyethylene and polypropylene waxes and Fischer-Tropsch waxes. Waxy materials useful for practice in the present include long chain (C12 to C24) aliphatic organic acids and their esters. Mixtures of the above waxes can also be used in the composition. Other suitable waxes for the composition of the present invention will be known to those skilled in the art. The wax may be mixed with other materials such as antioxidants or low molecular weight binders. The composition of the present invention suitably comprises about 10 to about 75 weight % of wax preferably about 15 to about 50% weight % of the wax.

The composition of the present invention also comprises water. The water functions a fluid vehicle and also importantly functions as the bubble-forming component when the ink composition is used in thermal drop-on-demand printers. Low molecular weight polyhydroxy compounds can be added to the water to form the aqueous polar phase. These compound facilitate the role of the water in the composition and also inhibit evaporation of the water. The aqueous phase suitably comprises about 10 to 75% water but can, in some cases, comprises only a small amount of water. Suitable low molecular weight polyhydroxy compounds include glycol and glycol ethers e.g. ethylene glycol, diethylene glycol, propylene glycol, and polyols such as glycerol. Low molecular weight sugars may also be utilized in the composition. The aqueous phase generally comprises about 10 to about 50 weight % of the composition.

The composition of the present invention also includes emulsifier. An emulsifier comprises molecules which have a polar head group and an non-polar tail group. Emulsifiers include amphiphiles and surfactants. The polar hydrophilic head group prefers a water environment. The non-polar tail group prefers an oil environment. The hydrophilic head group may either be ionic, nonionic or amphoteric. Ionic head groups may either be anionic or cationic. Suitable nonionic head groups are poly(ethyleneoxy) alcohols. Suitable anionic head groups are sulfonic acid or carboxylic acid groups. Suitable cationic head groups are alkyl ammonium ions.

The oleophilic non-polar tail groups are suitably straight chain hydrocarbons that vary in length from as small as butyl to as large as behenyl(C22) but more preferably are in the range of C12 to C18. Branched and cyclic chain and alkylphenyl groups can also be tail group structures.

Anionic emulsifier suitable for composition of the present invention include the amine salts of the C12 to C18 alkyl monocarboxylic acids alone or in combination with the corresponding alkyl monocarboxylic acid. Suitable alkyl monocarboxylic acids are C12 to C22 including lauric acid, myristic acid, palmitic acid, stearic acid, arachidic acid and behenic acid. Amines that form suitable salts of the alkyl monocarboxylic acids include morpholine, N-methyl morpholine, N-ethyl morpholine, ethanolamine, diethanolamine, triethanolamine, triisopropanolamine, tetramethylethylene diamine, tetrakis(2-hydroxypropyl) ethylenediamine, tetrakis(hydroxethyl)ethylene diamine, piperazine, piperidine, N-methyl piperidine and 1,4 bis(hydroxyethyl)piperazine. Preferred are hydroxyethylated amines. Suitable amines have thermal stability at the printer operating temperature and a pKa value (log of the reciprocal of the acid dissociation constant) in the range of that of stearic acid or smaller.

Suitable nonionic emulsifiers include N-alkyl and N-alkylphenoxy poly(alkylene glycol) ethers. Suitable cationic emulsifier include quaternary ammonium salts such as halides or tosylates e.g. cetyltrimethylammonium bromide. Other types of anionic, nonionic or cationic emulsifiers for use in the composition of the present invention will be known to those skilled in the art.

The composition of the present invention may include one or more emulsifiers which may be selected from the emulsifier and its salt or the same or different classes of emulsifiers to obtain certain desired properties such as a certain viscosity and/or melting point.

Emulsifier(s) comprise about 10 to about 80 weight % of the composition of the present invention preferably about 20 to about 60 weight %. Therefore it is preferred that the emulsifier be solid and have a liquid viscosity of less than about 25mN-sec/M² in the temperature range of about 40°C to about 90°C. However, emulsifiers having a melting point of 100°C and higher can be used in composition of the present invention if they form a composition having suitable properties when admixed with the other components of the composition. Other types of suitable emulsifiers having the desired physical properties for use in the composition of the present invention will be known to those skilled in the art such as those disclosed in McCutcheon's, Emulsifiers and Detergents, 1990; Chemical and Engineering News, page 31, 1/28/91 and Myers, Surfactant Science and Technology, VCH Publishers, Inc., 1988, the disclosures of which are incorporated herein by reference.

The composition of the present invention also includes a coemulsifier to dissolve any organized liquid crystal structure (gel phase) in the composition and thereby improve drop formation. Suitable coemulsifiers are propylene, glycol, linear chain alcohols (butyl alcohol to n-dodecyl alcohol), benzyl alcohol and 2,2' biphenol. The co-emulsifier generally comprises about 0 to 10 weight % of the composition.

The composition of the present invention also includes a colorant such as dyes or pigments. Suitable dyes include water soluble dyes, oil soluble dyes and emulsifier soluble dyes. Water soluble dyes that can be used in the practice of this invention include but are not limited to food black 2, acid black 2, direct black 19, direct blue 86, direct red 254, acid yellow 36. Oil soluble dyes that can be used in the practice of this invention are sudan black B, solvent black 5, solvent yellow 93, solvent yellow 93, solvent blue 70. Some of the colorants may react with amine salts and decolorize if maintained in the fluid state at elevated temperatures for extended periods of time. Consequently, screening of mixtures of amine salts and colorant may be desired to ensure compatibility and reduce decolorization. The solubility of a dye in the microemulsion composition may differ from its solubility in the individual components of the microemulsion. It is known that microdomains in the microemulsion exhibit strong solvation characteristics for dyes, depending upon the amphophilic nature of the dye. The more surfactant-like the dye becomes, the greater its solubility in microemulsions. Many dyes that are classed as water soluble are, in fact, amphophilic such as methyl orange or acid violet 17. It is desired that the dye be soluble in the microemulsion. Also, because a water soluble dye may be anionic, cationic, or amphophilic it may play a role in the phase behavior of the microemulsion and care may be taken to ensure that the dye has not changed its phase behavior. For example, if a water-soluble dye is chosen, its concentration in the water phase should be sufficient for the desired dye density. Therefore, if the aqueous component comprises 20% by weight of the microemulsion and the desired dye concentration is 3% by weight of the microemulsion, then the concentration of dye is 15% by weight of the aqueous phase. At this concentration of dye, the viscosity of the aqueous phase may become non-Newtonian or it may interfere with microemulsion formation. It is desirable to determine the microemulsion stability in the presence of the selected dye.

In the case of pigment dispersions, care may be taken to disperse and stabilize the pigment with the same emulsifier as used to form the microemulsion. The dispersed, stabilized pigment may then be mixed with the dyeless microemulsion. Dispersions of carbon black or other pigment colorants may be used in the present invention.

Charring (kogation) is a problem in thermal jet printing. In thermal jet printing, the printhead heater surfaces generally attain a temperature greater than 350°C during the pulse. At this temperature, some organic materials in the ink may decompose during the heating pulse. Thermal decomposition products generally remain dissolved in the ink and are ejected with the ink droplet. If, however, the decomposition is accompanied by condensation or polymerization then a deposit is likely to remain on the heater. Such deposits will insulate the heater surface from the ink and reduce jetting velocity.

Kogation can be reduced by selecting components of the composition of the present invention which will generally decompose to low molecular weight components and not polymerize or condense to higher molecular weight materials.

In selecting the organic components for the composition of the present invention preferred organic moieties are selected as follows:
_ straight alkyl preferred over branched alkyl (ethyl > t-butyl)
_ aliphatic preferred over aromatic
_ alcohols > phenols > acids > esters > ketones > ethers

Ink additives have also been found which are useful in reducing kogation. These additives are metallo-organics such as ferrocene, or a cobalt II or zinc salt e.g. cobaltous acetate, cobaltous laurate, and zinc stearate.

The microemulsion composition of the present invention can be formed by admixing wax, water, emulsifier, and the coemulsifier together as liquids at an elevated temperature in a suitable vessel using standard mixing equipment. After the liquid microemulsion has been formed the colorant may be added to the microemulsion carefully with stirring to maintain the microemulsion. Procedures and components for making microemulsion are well known to those skilled in the art as taught by Kahlweit and Strey, Angew Chem., International Edition, English, 1985, and Wormuth et al. "Solubilization of Dyes in Microemulsions", Langmuir, 1990, and Prince "Microemulsions", Academic Press Inc., 1977.

The following examples are detailed descriptions of methods of preparation of certain compositions of the present invention. The detailed preparations fall within the scope of, and serve to exemplify, the more generally described methods of preparation set forth above. The examples are presented for illustrative purposes only, and are not intended as a restriction on the scope of the invention. All temperatures are in degrees celsius and components in weight %.

### Example 1

A solid ink jet composition was made comprising the following components:

| Component | Weight % |
|---|---|
| stearic acid | 33.3% |
| morpholine | 10.2% |
| ceresin wax (m.p. 57°C) | 14.5% |
| water | 24.5% |
| n-butanol | 14.5% |
| oil red 0 | 3% |

When stearic acid, ceresin Wax and water were melted together in a 70-75°C bath with n-butanol a two phase system resulted. The stearic acid remained primarily in the wax phase. Addition of morpholine caused phase coalescence on simple shaking. Addition of more n-butanol dissolved the gel layer. The colorant was added after the dyeless system appeared to be single phase.

The above formulation was placed in a thermal ink jet printer with the head modified with an aluminum jacket to permit heating the ink to liquefy it. With a head temperature of 70-73°C droplets were jetted with a pulse width of 10 microsec; pulse voltage of about 19 volts and a drop frequency of 400 Hz. The drops were deposited on unsized paper and examined under a microscope. With water-based inks, unsized paper is known to produce large, feathered ink jet spots. With the above formulation the spots on the paper were small, round and unfeathered.

### Example 2

A solid ink jet composition was prepared generally in accordance with the procedure of Example 1 comprising the following components:

| Component | Weight |
|---|---|
| stearic acid | 38% |
| morpholine | 6% |
| paraffin wax (m.p. 58-61°C) | 22% |
| water | 22% |
| benzyl alcohol | 10% |
| solvent blue 35 | 3% |

This ink was loaded into the ink jet printer of Example 1 and jetted at similar temperature, voltage, pulse width and frequency conditions as Example 1. Printing on unsized paper yielded rounded spots. The viscosity of this ink at the operating temperature was 5 centipoise at 80°C and was 8.4 centipoise at 60°C. A small angle x-ray scattering ("SAXS") analysis of the ink, prior to the addition of dye, showed a scattering peak which corresponds to a micellar or layer spacing of 68 +/-12 angstroms. A subsequent SAXS analysis of the ink revealed a scattering peak measured to be 48+/-11.

### Example 3

A solid ink jet composition was prepared generally in accordance with the procedure of Example 1 comprising the following components:

| Component | Weight |
|---|---|
| monostearyl ether of diethylene glycol | 38% |
| monostearyl ether of eicosaethylene glycol | 38% |
| parafin wax | 10% |
| propylene glycol/water (65/35) | 11.5% |
| solvent 35 | 2.5% |

This ink was loaded into the ink jet printer of Example 1 and jetted at a similar temperature, voltage, pulse width and frequency conditions as Example 1. Printing on unsized paper yielded rounded spots.

### Example 4

Following the procedure of Example 1, several solid ink jet compositions were prepared comprising

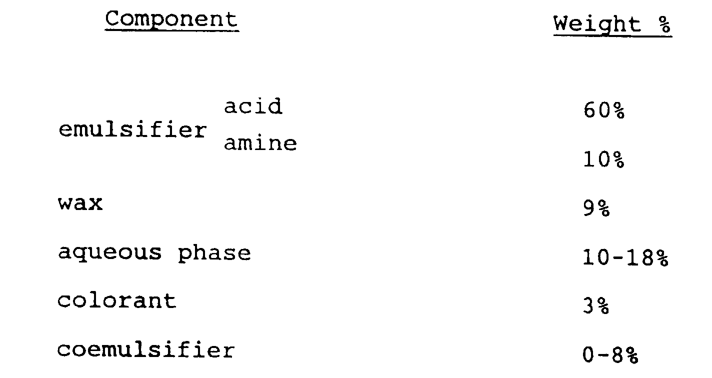

Where the following components were incorporated into the composition:
- acid -: stearic, lauric, palmitic, behenic and mixtures thereof.
- amines -: N,N,N',N',tetrakis(2-hydroxypropyl)ethylene diamine, N-methyl and N-ethylmorpholine, ethanolamine, diethanolamine, triethanolamine, triisopropanolamine, piperidine, 1-methylpiperidine, tetramethylethylenediamine, and 2-amino-2-methyl-1-propanol.
- Wax -: paraffin, beeswax and Montan wax
- Coemulsifier -: n-pentanol, n-hexanol, n-heptanol, n-dodecanol, benzyl alcohol, and 2,2'-biphenol.
- Colorants -: solvent blue 35 and 70, solvent red 24, solvent black 7, and sudan black B.

For each ink composition the amount of each component was adjusted to form a liquid which was jettable in the ink jet printer of Example 1.

## Claims

1. A solid hot melt ink composition for use in ink jet printers, which forms a liquid microemulsion on melting and comprises wax, water, emulsifier and colorant, and a coemulsifier to dissolve any organised liquid crystal structure in the composition , the coemulsifier being a C₄₋₁₂ linear chain alcohol, benzyl alcohol, 2,2'-biphenol or propylene glycol in an amount of up to 10% by weight of the composition.

2. The composition of claim 1 wherein said liquid is a water-in-oil microemulsion.

3. The composition of claim 2 wherein said liquid has a viscosity of less than about 25mN-sec/M².

4. The composition of claim 3 wherein said composition has a melting point in the range of about 40°C to about 90°C.

5. The composition of claim 3 wherein said emulsifier is anionic.

6. The composition of claim 5 wherein said emulsifier is an alkyl monocarboxylic acid, an amine salt of an alkyl monocarboxylic acid or a mixture thereof.

7. The composition of claim 6 wherein said emulsifier is a C12-C18 alkyl monocarboxylic acid or a hydroxyethylated amine salt of a C12-C18 alkyl monocarboxylic acid or a mixture thereof.

8. The composition of any preceding claim further comprising a cobalt salt.

9. The composition of claim 3 wherein said emulsifier is nonionic.

10. The composition of claim 3 wherein said emulsifier is cationic.

## Patentansprüche

1. Eine feste Heißschmelztintenzusammensetzung zur Verwendung in Tintenstrahldruckern, welche beim Schmelzen eine flüssige Mikroemulsion bildet und Wachs, Wasser, Emulgator und Farbmittel und einen Coemulgator zum Auflösen einer etwaigen organisierten Flüssigkristallstruktur in der Zusammensetzung enthält, wobei der Coemulgator ein geradkettiger C₄₋₁₂-Alkohol, Benzylalkohol, 2,2'-Biphenol oder Propylenglycol in einer Menge von bis zu 10 Gew.-% der Zusammensetzung ist.

2. Die Zusammensetzung nach Anspruch 1, worin die Flüssigkeit eine Wasser-in-Öl-Mikroemulsion ist.

3. Die Zusammensetzung nach Anspruch 2, worin die Flüssigkeit eine Viskosität von weniger als etwa 25 mN-sec/M² besitzt.

4. Die Zusammensetzung nach Anspruch 3, worin die Zusammensetzung einen Schmelzpunkt im Bereich von etwa 40°C bis etwa 90°C hat.

5. Die Zusammensetzung nach Anspruch 3, worin der Emulgator anionisch ist.

6. Die Zusammensetzung nach Anspruch 5, worin der Emulgator eine Alkylmonocarbonsäure, ein Aminsalz einer Alkylmonocarbonsäure oder eine Mischung davon ist.

7. Die Zusammensetzung nach Anspruch 6, worin der Emulgator eine C₁₂-C₁₈-Alkylmonocarbonsäure oder ein hydroxyethyliertes Aminsalz einer C₁₂-C₁₈-Alkylmonocarbonsäure oder eine Mischung davon ist.

8. Die Zusammensetzung nach irgendeinem der vorhergehenden Ansprüche, die darüber hinaus ein Cobaltsalz enthält.

9. Die Zusammensetzung nach Anspruch 3, worin der Emulgator nichtionisch ist.

10. Die Zusammensetzung nach Anspruch 3, worin der Emulgator kationisch ist.

## Revendications

1. Composition d'encre solide fusible à chaud pour l'utilisation dans des imprimantes à jet d'encre qui forme une micro-émulsion liquide lors de la fusion et qui contient de la cire, de l'eau, un émulsifiant et un colorant, et un co-émulsifiant pour dissoudre toute structure de cristaux liquides dans la composition, le co-émulsifiant étant un alcool C₄₋₁₂ à chaîne linéaire, l'alcool benzylique, le 2,2'-biphénol ou le propylèneglycol en quantité pouvant aller jusqu'à 10 % en poids de la composition.

2. Composition selon la revendication 1, dans laquelle ledit liquide est une micro-émulsion « eau dans l'huile ».

3. Composition selon la revendication 2, dans laquelle ledit liquide a une viscosité inférieure à environ 25 mN-s/m².

4. Composition selon la revendication 3, dans laquelle ladite composition a un point de fusion compris entre environ 40°C et environ 90°C.

5. Composition selon la revendication 3, dans laquelle ledit émulsifiant est anionique.

6. Composition selon la revendication 5, dans laquelle ledit émulsifiant est un acide alkylmonocarboxylique, un sel d'amine d'un acide alkylmonocarboxylique ou un mélange de ceux-ci.

7. Composition selon la revendication 6, dans laquelle ledit émulsifiant est un acide alkyl(C₁₂-C₁₈)monocarboxylique ou un sel d'amine hydroxyéthylée d'un acide alkyl(C₁₂-C₁₈)monocarboxylique ou un mélange de ceux-ci.

8. Composé selon l'une quelconque des revendications précédentes, comprenant un sel de cobalt.

9. Composition selon la revendication 3, dans laquelle ledit émulsifiant est non ionique.

10. Composition selon la revendication 3, dans laquelle ledit émulsifiant est cationique.
